# FASCICULE DE BREVET EUROPEEN

(11) **EP 1 436 991 B1**
(45) Date de publication et mention de la délivrance du brevet: **30.03.2011**
(21) Numéro de dépôt: 02783203.9
(22) Date de dépôt: 24.09.2002
(51) Int. Cl.: H04N 7/10

(54) **SYTEME DE DISTRIBUTION TV ET UNITE DE TRAITEMENT UTILISEE DANS CE SYSTEME DE DISTRIBUTION**
FERNSEHERVERTEILUNGSSYSTEM UND IN DEM VERTEILUNGSSYSTEM VERWENDETE VERARBEITUNGSEINHEIT
TELEVISION DISTRIBUTION SYSTEM AND PROCESSING UNIT USED IN SAID DISTRIBUTION SYSTEM

(30) Priorité: 25.09.2001 FR 0112533
(43) Date de publication de la demande: 14.07.2004
(73) Titulaire: CASANOVA, 77420 Champs Sur Marne (FR)
(72) Inventeur: Henri Lee, 77580 Villiers Sur Morin (FR)
(74) Mandataire: CAPRI
(86) Numéro de dépôt international: PCT/FR2002/003259
(87) Numéro de publication internationale: WO 2003/028369

(56) Documents cités:
- EP-A- 0 329 912
- EP-A- 1 061 741
- WO-A-01/69925
- US-A- 5 130 793
- US-A- 5 950 111
- PATENT ABSTRACTS OF JAPAN vol. 2000, no. 10, 17 novembre 2000 (2000-11-17) & JP 2000 188153 A (MATSUSHITA ELECTRIC WORKS LTD), 4 juillet 2000 (2000-07-04)

## Description

La présente invention concerne un système de distribution de signaux vidéo du type télévision que nous désignerons généralement sous le terme de signaux TV. Le terme signaux TV implique des critères qualitatifs indispensables à une visualisation acceptable par des récepteurs grand public. L'invention concerne également une unité de traitement de signaux utilisée dans le système de distribution de l'invention.

Pour la transmission des signaux TV, il est courant et conventionnel d'utiliser des câbles coaxiaux qui permettent une transmission des signaux TV correspondant à ces critères sur une largeur de bande allant conventionnellement de 5 à 862 MHz. Cette bande passante est composée de deux ensembles :
- une voie descendante qui apporte les signaux vidéo au récepteur (86 à 862Mhz),
- une voie remontante (5 à 65 Mhz) appelée plus communément « voie de retour » qui permet une interactivité des services proposés par un éventuel opérateur de réseau (internet, téléphonie, services en ligne).
Normalement, le câble issu de l'antenne ou du réseau de télédistribution est raccordé directement au poste de télévision ou récepteur TV.

Le système de distribution de la présente invention est un système qui s'intègre entre l'antenne ou la sortie du réseau de télédistribution et le récepteur TV. Par conséquent, la présente invention se limite spécifiquement au traitement des signaux TV allant sensiblement jusqu'à environ 900 MHz.

La présente invention propose les mêmes critères qualitatifs qu'une transmission par câble coaxial, sur une longueur de câble inférieure à 60m et en particulier, la gestion active de la voie de retour (5 à 65 Mhz) et de la voie descendante (86 à 862 Mhz), de la pente du signal, des affaiblissements, du facteur de bruit, de l'écart entre crête de modulation de deux porteuses < 3db, des rayonnements, de la symétrisation et de l'assymétrisation du signal, de l'impédance et de l'intermodulation d'ordre 2 ou 3.

En dehors de la transmission des signaux TV, il est déjà connu d'utiliser des câbles coaxiaux en association ou en combinaison avec des câbles de paires de fils torsadés. Pour relier un câble coaxial à un câble de paires torsadées, il est déjà connu d'utiliser un transformateur d'impédance, plus connu sous le terme de balun, qui permet une adaptation d'impédance en raccordant bout à bout deux câbles d'impédance caractéristiques différentes en évitant les phénomènes de dégradation du signal liés à la rupture d'impédance.

Une technologie consistant à convertir les signaux en bande de base et de les diffuser au travers d'une baie de commutation est une pratique onéreuse qui n'offre pas la complète transparence des technologies de transmission coaxiale et paire torsadée attendue par les usagers.

Cette technologie est l'origine du document US-5 130 793. Il part du principe physique que pour accéder à des longueurs importantes et d'affranchir des problèmes d'impédance et de rayonnement, les fréquences sont converties en « bande de base » (12Mhz pour la vidéo). C'est un commutateur installé en tête d'installation qui reçoit les informations de l'utilisateur et qui commute la chaîne désirée par l'utilisateur. Ce système qui permet d'accéder à des distances pouvant atteindre 500 m est d'une part très onéreux, nécessite un exploitant permanent et n'est absolument pas transparent pour un opérateur du câble par exemple.

Dans le domaine de la connectique et de la domotique, le câble le plus fréquemment utilisé pour un câblage ou un pré-câblage de bâtiment est le câble à paires torsadées. Ce câble à paires torsadées est utilisé pour la transmission de signaux très basse tension pour les usages les plus divers : téléphonie, informatique, automatisme, alarme, sonorisation, vidéo en bande de base etc. Il est aussi de plus en plus fréquent de pré-câbler des bâtiments à usage de bureaux ou même à usage domestique avec un réseau pré-câblé de courant faible utilisant des câbles à paires torsadées.

Faire passer à moindre coût un signal vidéo dans la paire torsadée reste simple si l'on se limite à régler uniquement le problème d'impédance et en se limitant en fréquence. En effet, on peut pour cela, comme dans le document US-5 950 111, utiliser un balun qui est un élément passif et réversible. Ainsi, la chaîne de liaison suivante est la solution apportée dans ce document : arrivée coaxiale, connecteur coaxial, balun 75 100 → ohms, connecteur paire torsadée (début de ligne).

Cette solution ne prend pas en compte les caractéristiques électriques du signal d'entrée par rapport au niveau de sortie. C'est donc en aval que ce traitement devra être opéré.

On connaît également du document EP-A- 1 061 741 un système de distribution de signaux montrant les caractéristiques du préambule de la revendication 1.

Le système de distribution de la présente invention a pour but de se servir d'un réseau très basse tension préexistant pour la transmission de signaux TV issus d'un câble coaxial.

Pour ce faire, la présente invention propose un système de distribution de signaux vidéo du type télévision (TV) selon la revendication 1. Ainsi, il est possible de faire transiter les câbles de paires torsadées qui relient les deux unités de traitement par un réseau de courant faible préexistant intégrant par exemple un ensemble sous-répartiteur. Les signaux TV peuvent ainsi être véhiculés sur le réseau courant faible préexistant qui s'étend dans toutes les pièces du local pré-câblé. On peut de ce fait installer un récepteur TV dans n'importe quelle pièce en branchant tout simplement son cordon d'antenne sur la prise coaxiale de la seconde unité de traitement qui est branchée sur le réseau courant faible : le signal TV peut ainsi être transmis par l'intermédiaire de ce réseau courant faible jusqu'au récepteur TV. En amont, le câble coaxial provenant de l'antenne ou du réseau câblé est branché sur la prise d'entrée de la première unité de traitement qui elle est reliée au réseau courant faible préexistant utilisant des fils torsadés en conservant les critères qualitatifs indispensables à une réception standard tels que définis précédemment.

Selon une caractéristique avantageuse de l'invention, la première unité de traitement d'entrée comprend des moyens de coupure de la transmission des signaux au cas où un câble de paires de fils torsadés n'est pas raccordé à la prise de sortie courant faible de la première unité de traitement d'entrée. Avantageusement, la prise de sortie courant faible de la première unité de traitement d'entrée comprend des moyens de détection de présence d'un connecteur basse tension raccordé au câble de fils torsadés et enfiché dans ladite prise de sortie.

On évite ainsi que la prise de sortie de la première unité de traitement ou que la prise de sortie de la seconde unité de traitement ne rayonne fortement, induisant de ce fait des champs électromagnétiques qui peuvent être perturbants et altérer la réception télévisuelle par des applications situées au voisinage. En effet, en l'absence de ces moyens de coupure de transmission de signaux, et en l'absence des récepteurs TV branchés sur ce système de distribution de l'invention, les signaux TV issus de l'antenne ou du réseau câblé seraient transmis jusqu'au niveau des prises de sortie de la première unité de traitement ou de la seconde unité de traitement et pollueraient ainsi électromagnétiquement tout l'environnement. Grâce à ces moyens de coupure, toute perturbation électromagnétique est évitée.

Selon une autre caractéristique de l'invention, la première unité de traitement d'entrée comprend des moyens de traitement de signaux, un répartiteur et plusieurs prises de sortie courant faible pour paires de fils torsadés reliées chacune au répartiteur, les moyens de coupure agissant entre le répartiteur et lesdites prises de sortie de manière à couper la transmission des signaux entre le répartiteur et la prise de sortie pour laquelle l'absence d'un connecteur enfiché est détecté.

Selon un autre aspect de l'invention, un ensemble sous-répartiteur est monté entre la première et la seconde unités de traitement, au moins un câble de paires de fils torsadés reliant la première unité de traitement à l'ensemble sous-répartiteur, et au moins un autre câble de paires de fils torsadés reliant l'ensemble sous-répartiteur à la seconde unité de traitement, ladite seconde unité comprenant une prise de sortie coaxiale et au moins une prise de sortie pour paires de fils torsadés. On peut ainsi intégrer le système de distribution de l'invention dans un réseau courant faible préexistant qui comprend un ensemble sous-répartiteur par lequel transitent toute les applications électriques courant faible utilisant le réseau de paires de fils torsadés. On peut ainsi se servir de ce réseau courant faible préexistant pour transmettre les signaux TV sans perte de transmission. A la sortie du réseau courant faible, il suffit de mettre en place la seconde unité de traitement qui peut par exemple se présenter sous la forme d'un adaptateur comprenant un connecteur courant faible pour paires de fils torsadés adapté à être enfiché sur une prise courant faible pour paires de fils torsadés dudit ensemble sous-répartiteur. Ledit système de distribution de l'invention peut alors se résumer très simplement à une première unité de traitement d'entrée que l'on intègre entre la sortie du câble provenant de l'antenne ou du réseau câblé et l'ensemble sous-répartiteur, auquel elle est raccordée par un simple cordon de paires de fils torsadés, et une seconde unité de traitement sous la forme d'un adaptateur enfichée dans une prise de sortie de l'ensemble sous-répartiteur du réseau courant faible préexistant. Il suffit alors de raccorder le cordon coaxial du récepteur TV sur la prise de sortie coaxiale de la seconde unité de traitement adaptateur.

Selon une autre caractéristique de l'invention, la paire de fils torsadés qui transmet les signaux TV transformés est blindée. On peut par exemple se servir d'un cordon composé de quatre paires de fils torsadés dont une paire est une paire dite « de course », présentant de très hautes performances pour le transport de signaux vidéos et qui physiquement est un peu plus grosse en section.

L'invention sera maintenant plus amplement décrite en référence aux dessins joints donnant à titre d'exemple non limitatif un mode de réalisation et d'application de la présente invention.

Sur les figures :
- la figure 1 est une vue très schématique d'un système de distribution de l'invention mis en oeuvre entre une antenne TV et un récepteur TV et transitant par un réseau courant faible qui intègre un ensemble sous-répartiteur,
- la figure 2 est également une vue schématique montrant l'intégration d'un système de distribution de l'invention dans un réseau courant faible préexistant équipant des locaux constitués de plusieurs pièces, et
- la figure 3 est une vue schématique d'une seconde unité de traitement de sortie selon l'invention.

Le système de distribution de signaux TV selon l'invention comprend essentiellement deux éléments constitutifs, à savoir une première unité de traitement d'entrée 1 et une seconde unité de traitement de sortie 3. La première unité de traitement 1 comprend une prise ou un port d'entrée 10 du type coaxial destiné à recevoir un câble coaxial 41 qui est raccordé à son extrémité soit à une antenne 4, qui peut être à râteaux ou parabolique, soit à un réseau de télédistribution. La prise d'entrée 10 peut être tout à fait conventionnelle de manière à pouvoir recevoir un connecteur coaxial conventionnel. D'autre part, la seconde unité de traitement de sortie 3 comprend une prise ou un port de sortie coaxial 31 destiné à recevoir un câble coaxial 53 relié à son extrémité à un récepteur de télévision 5. Les câbles coaxiaux 41 et 53 utilisés pour le raccordement aux deux unités de traitement 1 et 3 permettent la transmission de signaux du type télévision (TV) dont l'impédance est caractéristiquement de 75 ohms sur une bande de fréquence allant de 5 à 862 MHz, comme spécifié par la norme MABLR.

Le système de distribution de signaux TV selon l'invention permet de transmettre les signaux TV issus du câble coaxial 41 à travers des câbles de paires de fils torsadés dont les caractéristiques de transmission sont normalement différentes de celles des câbles coaxiaux. Pour permettre cette transmission des signaux TV, le première unité de traitement d'entrée 1 comprend des moyens de traitement 14 permettant de transformer ou de reconfigurer les signaux TV issus du câble coaxial d'entrée 41 de manière à pouvoir les transmettre à travers une paire de fils torsadés conventionnelle sans perte de transmission avec des critères qualitatifs énumérés précédemment. Pour ce faire, les moyens de traitement 14 réadaptent l'impédance caractéristique de 75 ohms du câble coaxial à une impédance de 100 ou 120 ohms. Les signaux TV sont symétrisés, amplifiés, pré-pentés sur certaines plages de bandes de fréquence pour compenser les pertes de transmission du câble de paires de fils torsadés. Ainsi, à la sortie des moyens de traitement 14, les signaux TV présentent une impédance de 100 à 120 ohms sur une bande de fréquence allant également de 5 à 65Mhz pour la voie de retour et de 86 à 862 MHz pour la voie descendante. Les signaux TV issus du câble coaxial d'entrée 41 peuvent alors être injectés sans perte de transmission sur une paire de fils torsadés conventionnelle.

La première unité de traitement 1 comprend également une ou plusieurs prises de sortie courant faible pour câbles de paires de fils torsadés. Dans la suite de la description, on désignera ces prises de sortie courant faible sous le terme de prises RJ 45, bien que d'autres types de prises courant faible peuvent être utilisés. Un ou plusieurs câbles de paires de fils torsadés 12 peuvent être ainsi raccordés à la première unité de traitement d'entrée 1. Pour l'instant, nous supposerons que l'unité de traitement 1 ne comprend qu'une seule prise RJ 45 pour le raccordement d'un seul câble de paires de fils torsadés 12.

Bien que ceci n'est pas représenté sur les figures, le câble de paires torsadés 12 peut être directement relié à la seconde unité de traitement de sortie 3. Toutefois, ceci ne présente pas un grand intérêt, mais nous expliquerons la forme de réalisation de la présente invention de cette manière dans un but de simplicité dans un premier temps.

Ainsi, les signaux TV transformés par la première unité de traitement d'entrée 1 sont transmis à la seconde unité de traitement de sortie 3 par un câble de paires de fils torsadés 12. Dans cette seconde unité de traitement de sortie, il y a des moyens de traitement 34, avantageusement passifs du type balun, qui permettent de traiter à nouveau les signaux TV transformés en signaux TV susceptibles d'être transmis à nouveau par un câble coaxial 53, qui lui est relié au récepteur TV 5. Les moyens de traitement 34 adaptent à nouveau l'impédance à 75 ohms, assymétrisent le signal tout en maintenant une transmission efficace sur la bande de fréquence allant de 5 à 65 Mhz pour la voie de retour et de 86 à 862 MHz pour la voie descendante. En somme, les signaux TV à l'issue des moyens de traitement 34 sont sensiblement ou parfaitement identiques à ceux transmis par le câble coaxial d'entrée 41 relié à l'antenne ou au réseau de télédistribution.

En pratique, les moyens de traitement 14 et 34 intégrés respectivement dans la première unité de traitement 1 et la seconde unité de traitement 2 peuvent être des transformateurs d'impédance classiques plus connus sous le terme de balun. Les baluns se présentent conventionnellement sous la forme de connecteurs permettant de relier un câble symétrique (paires torsadées) à un câble asymétrique (câble coaxial). Ils permettent une adaptation d'impédance permettant de raccorder de bout à bout deux câbles d'impédance caractéristiques différentes en évitant tous les phénomènes de dégradation du signal.

Le système de distribution de la présente invention permet donc de faire transiter des signaux TV classiques issus d'un câble coaxial sur des câbles classiques formés de paires de fils torsadés. De cette manière, il est possible de faire transiter des signaux TV issus d'un câble coaxial à travers un réseau courant faible utilisant des câbles de paires de fils torsadés. En effet, il est de plus en plus courant de pré-câbler certains bâtiments ou locaux, notamment à usage de bureaux, d'un réseau courant faible sur lequel on peut venir se connecter avec un grand nombre d'interfaces, comme un téléphone, un ordinateur, un modem, un fax, une alarme, de la sonorisation (HIFI), un système d'ouverture de portes automatique, un interphone, etc. De tels réseaux courant faible sont maintenant également installés dans les habitations privées. L'avantage de ce type de réseau courant faible pré-câblé est qu'il s'étend dans toutes les pièces du local ou de l'habitation, de sorte qu'une information peut être très facilement transmise jusque dans n'importe quelle pièce.

Jusqu'à présent, lorsque l'on veut installer un récepteur TV relié à une antenne ou au réseau câblé, il faut tirer un nouveau câble coaxial depuis l'antenne ou depuis un boîtier de répartition jusqu'au nouveau récepteur TV. Ceci prend du temps et n'est souvent pas très esthétique car il est difficile d'intégrer le nouveau câble coaxial dans le plancher ou les cloisons.

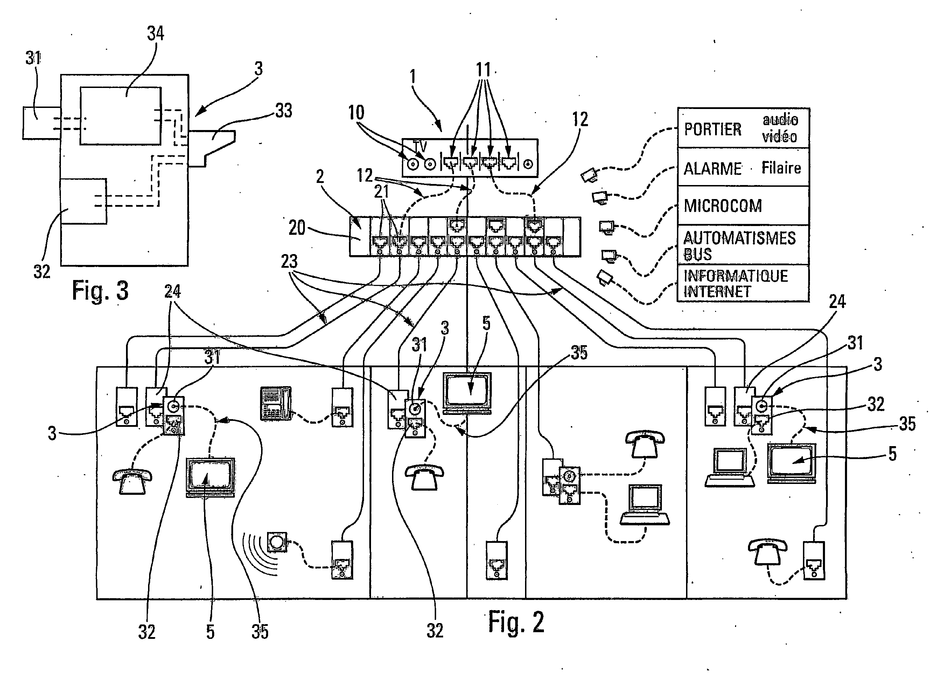

Le présent système de distribution de signaux TV de l'invention permet d'utiliser le réseau courant faible préexistant pour acheminer les signaux TV depuis le câble coaxial initialement installé et relié à l'antenne ou au réseau câblé jusqu'au récepteur TV. En effet, l'exemple très simpliste que nous avons décrit précédemment ne met en oeuvre qu'un simple câble de paires de fils torsadés 12 reliant les deux unités de traitement de l'invention. toutefois, il est tout à fait possible de remplacer ce simple câble par un cheminement câblé plus complexe passant à travers un réseau courant faible préexistant. En général, un tel réseau courant faible comprend au moins un sous-répartiteur 2 permettant un brassage des câbles de paires torsadés. Ce sous-répartiteur 2 se présente conventionnellement sous la forme d'un bandeau 20 définissant sur sa face avant plusieurs prises courant faible 21 par exemple du type RJ 45. D'autre câbles de paires de fils torsadés peuvent être connectés à l'arrière du bandeau 20. Ce sous-répartiteur 2 permet de manière pratique de rassembler toutes les informations transmises par le réseau courant faible afin de les distribuer vers les différentes pièces du local pré-câblé. En se référant à la figure 2, on peut voir qu'un portier audio ou vidéo, une alarme filaire, ou des automatismes peuvent être connectés sur le sous-répartiteur 2 qui renvoie les signaux vers des prises de sortie 24 sur lesquelles on peut brancher ou connecter un appareil de commande adéquat.

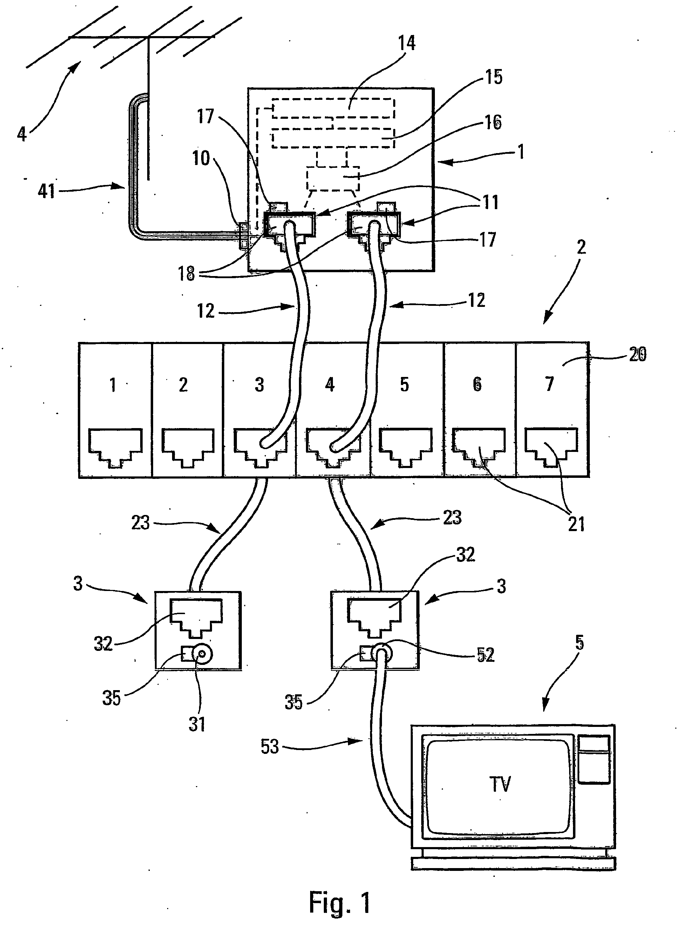

En se référant à la figure 1, on va expliquer de manière très schématique l'utilisation d'un système de distribution selon l'invention en association avec un réseau courant faible classique comprenant un sous-répartiteur 2. L'unité de traitement d'entrée 1 peut par exemple être raccordée à la cellule 3 du sous-répartiteur 2 au moyen d'un câble de paires de fils torsadés 12. A cet effet, le câble 12 peut comprendre un connecteur 18 adapté à s'enficher dans la prise courant faible 11 de l'unité de traitement d'entrée 1. Un autre câble de paires de fils torsadés 23 est raccordé à la cellule 3 du sous-répartiteur 2 de manière à établir un contact électrique avec le câble 12. Ce câble 23 est ensuite raccordé à la seconde unité de traitement 3. La seconde unité de traitement 3 est par exemple située dans une pièce du local pré-câblé, par exemple une chambre à coucher d'une habitation. On voit ainsi que le raccordement du système de distribution selon l'invention sur un réseau courant faible préexistant est très simple en se servant uniquement de deux câbles de paires de fils torsadés 12 et 23. Plus précisément, les signaux TV ne sont transmis que par une paire de fils torsadés des câbles 12 et 23. Pour améliorer la transmission, à ces hautes fréquences (5 à 862 MHz), on peut utiliser une paire dite «de course » qui présente une section supérieure et est pourvue d'un blindage électromagnétique.

La seconde unité de traitement 3 peut être directement intégrée dans un boîtier de raccordement ou une plinthe dans la pièce du local. Dans ce cas, le câble 23 relie directement la seconde unité de traitement 3. Etant donné que la transmission des signaux TV n'utilise qu'une seule paire du câble 23, alors que celui-ci est composé conventionnellement de quatre paires de fils torsadés, il reste des paires non utilisées. Ces paires non utilisées peuvent par conséquent servir pour la transmission d'autres types de signaux, par exemple téléphonique ou informatique. Par conséquent, il est avantageux que la seconde unité de traitement 3 comprenne en plus de la prise de sortie coaxiale 31 une ou plusieurs prises de sortie courant faible, par exemple du type RJ 45. Ainsi, une interface conventionnelle peut être raccordée à la seconde unité de traitement 3 au moyen d'un câble conventionnel composé de paires de fils torsadés. C'est précisément ce que l'on peut voir sur la figure 1, où l'unité de traitement 3 est directement raccordée au câble 23 et présente une sortie coaxiale 31 et une sortie pour paires torsadées 32.

Avantageusement, le système de distribution de l'invention permet également une répartition ou une division des signaux TV afin de pouvoir raccorder plusieurs postes TV 5. Pour ce faire, la première unité de traitement d'entrée 1 comprend un répartiteur 15 disposé à la sortie de l'unité de traitement 14. Le répartiteur 15 permet de dupliquer les signaux TV de manière à fournir plusieurs sorties de signaux TV ayant les mêmes caractéristiques que les signaux TV à la sortie de l'unité de traitement 14. Les sorties du répartiteur 15 sont reliées chacune à une prise de sortie courant faible 11, par exemple du type RJ 45, comme on peut le voir sur les deux figures 1 et 2. Sur la figure 1, il y a deux sorties 11 alors que sur la figure 2 il y a quatre sorties 11. L'unité de traitement 1 de la figure 1 permet donc le raccordement de deux récepteurs TV alors que l'unité de la figure 2 permet le raccordement de quatre récepteurs TV 5.

En se référant à la figure 1, on voit qu'un récepteur TV 5 est raccordé à une seconde unité de traitement de sortie 3 elle-même raccordée par l'intermédiaire des câbles 23 et 12 à la première unité de traitement d'entrée 1. En revanche, la seconde unité de traitement de sortie 3 est libre. Les signaux TV sont donc transmis jusqu'à la prise de sortie coaxiale 31 qui émet de ce fait un rayonnement électromagnétique intense sur une large bande de fréquence. Ce rayonnement est hautement parasite et peut très fortement perturber l'environnement.

Selon l'invention, les moyens de coupure de la transmission des signaux TV sont prévus au niveau de la première unité de traitement d'entrée 1 sous la référence numérique 16. Ces moyens de coupure sont intégrés entre le répartiteur 15 et les prises de sortie courant faible 11. Ces moyens de coupure 16 coupent la transmission dans le cas où aucun câble 12 n'est raccordé au niveau des prises de sortie 11. Pour ce faire, chaque prise 11 est équipée d'un capteur de présence 17 qui envoie un signal de détection aux moyens de coupure 16 dans le cas où une des prises 11 ne reçoit pas un connecteur relié au câble 12. Les moyens de coupure 16 ne coupent bien entendu la transmission que vers la prise 11 où l'absence de connecteur approprié 18 est détectée. La transmission du signal de détection au moyen de coupure 16 s'effectue par un simple rebouclage.

En variante ou de préférence additionnellement, les moyens de coupure 16 agissent également en coupant la transmission des signaux TV entre le répartiteur 15 et les prises 11 dans le cas où une des prises de sortie coaxiales 31 ne reçoit aucun connecteur approprié 52 relié à un câble 53 raccordé à un récepteur TV 5. De la même manière, la détection de l'absence du raccordement d'un connecteur approprié 53 sur la prise coaxiale 31 est effectuée à l'aide d'un détecteur de présence approprié 35 qui envoie un signal de détection au moyen de coupure 16 à travers une paire de fils torsadés des câbles 23 et 12. Ceci est également effectué par rebouclage. Ainsi, si aucun connecteur n'est enfiché sur la prise de sortie coaxiale 31, comme c'est le cas pour l'unité de traitement de sortie 3 de gauche sur la figure 1, le détecteur de présence 35 détecte l'absence de ce connecteur et envoie un signal de détection au moyen de coupure 16 à travers une des paires de fils torsadés 23 et 12.

On évite ainsi en coupant la transmission des signaux TV de polluer l'environnement de la première unité de traitement 1 au niveau des prises 11 et de la deuxième unité de traitement 3 au niveau de sa prise de sortie coaxiale 31.

La ligne de rebouclage ou de service sert ici à faire remonter des signaux de détection de la seconde unité de traitement à la première unité de traitement 1. On peut bien entendu se servir de cette ligne de service pour faire remonter d'autres signaux, comme par exemple des signaux de commande ou des signaux vidéo ou audio préalablement modulés. Les signaux de commande peuvent être émis par une télécommande universelle qui envoie un signal de commande, par exemple de lecture, à une source de signaux vidéo ou audio, comme un magnétoscope, un lecteur DVD, une caméra, un terminal satellite, une chaîne HIFI, etc. En retour, les signaux peuvent être émis par ces sources internes ou externes qui vont injecter leurs signaux sur la ligne de service après modulation. Le modulateur peut être monté entre la prise 32 et le connecteur 33. On peut ainsi parler d'un réseau de service et d'un réseau de distribution qui sont tous deux formés par le réseau courant faible C paires torsadées préexistant.

On se référera maintenant à la figure 2 pour expliquer une variante de réalisation au niveau de l'unité de traitement de sortie 3. Sur la figure 2, on voit plusieurs pièces, en l'occurrence quatre, équipées chacune de matériels différents, tels qu'un téléphone, un interphone, un visiophone, un ordinateur ou un récepteur TV. Le réseau courant faible comprend également un sous-répartiteur 2 qui relie au moyen de câbles de paires de fils torsadés plusieurs prises de sortie installées dans les différentes pièces, par exemple au niveau de boîtier ou de plinthe. La première unité de traitement d'entrée 1 est reliée au sous-répartiteur 2 de la même manière que dans la forme de réalisation de la figure 1, c'est à dire à l'aide de câbles de paires de fils torsadés 12. L'unité d'entrée 1 comprend également deux prises d'entrée coaxiale 10 pour un raccordement à une antenne ou à un réseau câblé. Plusieurs interfaces peuvent également être raccordées directement sur le sous-répartiteur 2 au niveau de ses prises 21 : on peut par exemple y raccorder un système d'ouverture de portes équipé d'un système de surveillance audio ou vidéo, une alarme filaire, des ordinateurs, etc. En revanche, la seconde unité de traitement 3 n'est pas directement raccordée au câble 23, mais se présente sous la forme d'un adaptateur susceptible d'être connecté sur les prises de sortie 24 faisant partie du réseau courant faible préexistant. Pour ce faire, comme on peut le voir sur la figure 3, l'adaptateur 3 comprend un connecteur courant faible 33 susceptible d'être inséré dans la prise courant faible 24 par exemple du type RJ 45. Deux paires de fils torsadés sont reliées à la prise de sortie coaxiale 31, une pour la transmission des signaux TV, et une pour la transmission en retour du signal de détection d'absence ou de présence de connecteur 52. Les deux autres paires de fils torsadés non utilisées sont raccordées directement à une prise de sortie courant faible 32, par exemple du type RJ 45. Bien entendu, les signaux TV sont traités au niveau des moyens de traitement 34 qui peuvent être un balun avant d'être envoyés au niveau de la prise de sortie coaxiale 31. Cet adaptateur 3 permet donc d'une part la transformation des signaux TV pour la paire de fils torsadés véhiculant les signaux TV, et d'autre part le simple report des signaux courant faible pour les paires de fils non utilisées par les signaux TV. Comme on peut le voir sur la figure 2, un récepteur TV 5 peut être raccordé sur la prise coaxiale 31 de l'adaptateur 3 et un téléphone peut en outre être raccordé sur la prise courant faible 32 de l'adaptateur 3. Dans ce cas, c'est à dire avec une unité de traitement de sortie 3 sous la forme d'un adaptateur enfichable, il est extrêmement aisé de mettre en oeuvre le système de distribution de l'invention en intégrant très simplement la première unité de traitement d'entrée 1 entre le câble coaxial issu de l'antenne et le sous-répartiteur 2 du réseau courant faible préexistant et en branchant l'adaptateur/seconde unité de traitement de sortie 3 sur une des prises de sortie 24 du réseau de courant faible préexistant. On peut ainsi de manière très facile installer un récepteur TV 5 dans n'importe quelle pièce d'un local où s'étend un réseau au courant faible pré-câblé préexistant. Le présent système de distribution est pleinement efficace sur tous types de réseaux courant faible pour une longueur de câbles de paires de fils torsadés n'excédant pas sensiblement 60 mètres, ce qui englobe la totalité des logements d'habitation.

Grâce au système de distribution de l'invention, il est possible d'acheminer des signaux TV sur un réseau courant faible préexistant de câbles de paires de fils torsadés, tout en permettant une répartition/duplication des signaux TV, tout en assurant une pollution électromagnétique minimale, et ceci sans restreindre les capacités du réseau courant faible préexistant. Il est en outre à noter que la mise en place du système de distribution de l'invention est extrêmement facile.

## Revendications

1. Système de distribution de signaux vidéo du type télévision (IV) ayant une bande de fréquence allant de 5 à 900 MHz environ, ledit système comprenant :
- un câble coaxial d'entrée (41) adapté à être relié à une antenne TV (4) ou à un réseau de télédistribution,
- un câble coaxial de sortie (53) adapté à être relié à un récepteur de télévision (5),
- une première unité de traitement d'entrée (1) comprenant une prise d'entrée coaxiale (10), au moins une prise de sortie courant faible (11) pour paires de fils torsadés et des moyens de traitement (14) pour traiter les signaux TV issus du câble coaxial de manière à les transformer en signaux ayant sensiblement les mêmes caractéristiques de transmission sur la même bande de fréquence sur une paire de fils torsadés,
- au moins une seconde unité de traitement de sortie (3) comprenant un port d'entrée courant faible (33) pour paires de fils torsadés, une prise de sortie coaxiale (31) et des moyens de traitement (34) pour traiter les signaux issus d'une paire de fils torsadés (12) connectée à la première unité de traitement d'entrée (1) de manière à les transformer en signaux sensiblement identiques à ceux issus dudit câble coaxial (41), et
- au moins un câble de liaison (12, 23) constitué de paires de fils torsadés reliant la première unité de traitement (1) à la seconde unité de traitement (3),
dans lequel la première unité de traitement d'entrée (1) comprend des moyens de coupure (16) de la transmission des signaux dans le cas où un câble coaxial (53) n'est pas raccordé à la prise de sortie coaxiale (31) de la seconde unité de traitement d'entrée (3),
**caractérisé en ce que** :
- la prise de sortie coaxiale (31) de la seconde unité de traitement de sortie comprend des moyens de détection de présence (35) d'un connecteur basse tension (52) raccordé à un câble coaxial de sortie (53) et enfiché dans ladite prise de sortie coaxiale (31), et
- une paire de fils torsadés dudit câble de liaison sert de ligne de rebouclage entre la seconde (3) et la première (1) unité de traitement pour transmettre un signal de présence ou d'absence de connecteur aux moyens de coupure (16).

2. Système selon la revendication 1, dans lequel la première unité de traitement d'entrée (1) comprend des moyens de coupure (16) de la transmission des signaux au cas où un câble de paires de fils torsadés (12) n'est pas raccordé à la prise de sortie courant faible (11) de la première unité de traitement d'entrée (1).

3. Système selon la revendication 2, dans lequel la prise de sortie courant faible (11) de la première unité de traitement d'entrée (1) comprend des moyens de détection de présence (17) d'un connecteur basse tension (18) raccordé au câble de fils torsadés (12) et enfiché dans ladite prise de sortie (11).

4. Système selon l'une quelconque des revendications précédentes dans lequel la première unité de traitement d'entrée (1) comprend des moyens de traitement de signaux (14), un répartiteur (15) et plusieurs prises de sortie courant faible (11) pour paires de fils torsadés reliées chacune au répartiteur (15), les moyens de coupure (16) agissant entre le répartiteur (15) et lesdites prises de sortie (11) de manière à couper la transmission des signaux entre le répartiteur et la prise de sortie pour laquelle l'absence d'un connecteur (18) enfiché est détecté.

5. Système selon l'une quelconque des revendications précédentes, dans lequel un ensemble sous-répartiteur (2) est monté entre la première (1) et la seconde (3) unités de traitement, au moins un câble de paires de fils torsadés (12) reliant la première unité de traitement (1) à l'ensemble sous-répartiteur (2), et au moins un autre câble de paires de fils torsadés (23) reliant l'ensemble sous-répartiteur (2) à la seconde unité de traitement (3), ladite seconde unité (3) comprenant une prise de sortie coaxiale (31) et au moins une prise de sortie (32) pour paires de fils torsadés.

6. Système selon la revendication 5, dans lequel la seconde unité de traitement (3) se présente sous la forme d'un adaptateur comprenant un connecteur courant faible pour paires de fils torsadés (33) adapté à être enfiché dans une prise de sortie courant faible (24) pour paires de fils torsadés reliées audit ensemble sous-répartiteur (2) pour un câble de paires de fils torsadés (23).

7. Système selon l'une quelconque des revendications précédentes, dans lequel la paire de fils torsadés qui transmet les signaux TV transformés est blindée.

8. Système selon l'une quelconque des revendications précédentes, dans lequel la première unité de traitement d'entrée est une unité active comprenant des moyens de traitement actifs.

9. Système selon la revendication 8, dans lequel les moyens de traitement actifs comprennent un étage d'amplification (14).

10. Système selon l'une quelconque des revendications précédentes, dans lequel les moyens de traitement de la seconde unité de traitement comprennent des moyens passifs tels qu'un balun.

11. Système selon l'une quelconque des revendications précédentes, dans lequel la seconde unité de traitement est pourvue d'une prise courant faible (32) reliée au port d'entrée (33) par l'intermédiaire d'un modulateur pour acheminer des signaux sur une paire torsadée de rebouclage.

## Claims

1. System for the distribution of television (TV) type video signals with a frequency band of up to about 5 to 900 MHz, the said system comprising:
- an input coaxial cable (41) adapted for connection to a TV antenna (4) or to a cable television network,
- an output coaxial cable (53) adapted for connection to a television set (5),
- a first input processing unit (1) comprising a coaxial input terminal (10), at least one low current terminal (11) for twisted wire pairs and processing means (14) for processing TV signals output from the coaxial cable so as to transform them into signals with substantially the same transmission characteristics on the same frequency band on a twisted wires pair,
- at least one second output processing unit (3) comprising a low current input port (33) for twisted wire pairs, a coaxial output terminal (31) and processing means (34) for processing signals output from a twisted wires pair (12) connected to the first input processing unit (1) so as to transform them into signals substantially identical to the signals output from the said coaxial cable (41), and
- at least one connecting cable (12, 23) consisting of twisted wire pairs connecting the first processing unit (1) to the second processing unit (3),
in which the first input processing unit (1) comprises means of cutting off (16) the signal transmission in the case in which a coaxial cable (53) is not connected to the coaxial output terminal (31) of the second input processing unit (3),
**characterised in that**:
- the coaxial output terminal (31) of the second output processing unit comprises means of detecting the presence (35) of a low voltage connector (52) connected to an output coaxial cable (53) and plugged into the said coaxial output terminal (31), and
- one twisted wires pair in the said connecting cable acts as a loop back line between the second (3) and the first (1) processing unit to transmit a connector present or absent signal to the cut-off means (16).

2. System according to claim 1, in which the first input processing unit (1) comprises means of cutting off (16) the signal transmission in the case in which a cable consisting of twisted wire pairs (12) is not connected to the low current output terminal (11) of the first input processing unit (1).

3. System according to claim 2, in which the low current output terminal (11) of the first input processing unit (1) comprises means of detecting the presence (17) of a low voltage connector (18) connected to the twisted wires cable (12) and plugged into the said output terminal (11).

4. System according to any one of the previous claims, in which the first input processing unit (1) comprises signal processing means (14), a cross connect (15) and several low current output terminals (11) for twisted wire pairs each connected to the cross connect (15), the cut-off means (16) acting between the cross connect (15) and the said output terminals (11) so as to cut off transmission of signals between the cross connect and the output terminal for which the lack of a plugged-in connector (18) is detected.

5. System according to any one of the previous claims, in which a sub-cross connect assembly (2) is installed between the first (1) and the second (3) processing units, with at least one cable consisting of twisted wire pairs (12) connecting the first processing unit (1) to the sub-cross connect assembly (2), and at least one other cable consisting of twisted wire pairs (23) connecting the sub-cross connect assembly (2) to the second processing unit (3), the said second unit (3) comprising a coaxial output terminal (31) and at least one output terminal (32) for twisted wire pairs.

6. System according to claim 5, in which the second processing unit (3) is in the form of an adapter comprising a low current connector for twisted wire pairs (33) adapted so that it can be plugged onto a low current terminal (24) for twisted wire pairs connected to the said sub-cross connect assembly (2) for a cable consisting of twisted wire pairs (23).

7. System according to any one of the previous claims, in which the twisted wires pair that transmits the transformed TV signals is shielded.

8. System according to any one of the previous claims, in which the first input processing unit is an active unit comprising active processing means.

9. System according to claim 8, in which the active processing means comprise an amplification stage (14).

10. System according to any one of the previous claims, in which the processing means of the second processing unit comprise passive means such as a balun.

11. System according to any one of the previous claims, in which the second processing unit is provided with a low current terminal (32) connected to the input port (33) through a modulator to route signals on a loop back twisted pair.

## Patentansprüche

1. System zum Verteilen von Fernseh(TV)-Videosignalen mit einem Frequenzbereich von etwa 5 bis 900 MHz, wobei das System aufweist:
- ein koaxiales Eingangskabel (41), das an eine Fernsehantenne (4) oder ein Programmübertragungsnetz angeschlossen werden kann,
- ein koaxiales Ausgangskabel (53), das an einen Fernsehempfänger (5) angeschlossen werden kann,
- eine erste Eingangsverarbeitungseinheit (1), aufweisend eine koaxiale Eingangssteckdose (10), mindestens eine Schwachstrom-Ausgangssteckdose (11) für verdrillte Leitungspaare und Verarbeitungsmittel (14) zum Verarbeiten der aus dem koaxialen Kabel kommenden Fernsehsignale, um diese in Signale umzuwandeln, die in etwa die gleichen Übertragungsmerkmale im gleichen Frequenzbereich in einem verdrillten Leitungspaar aufweisen,
- mindestens eine zweite Ausgangsverarbeitungseinheit (3), aufweisend einen Schwachstrom-Eingangsanschluss (33) für verdrillte Leitungspaare, eine koaxiale Ausgangssteckdose (31) und Verarbeitungsmittel (34) zum Verarbeiten der aus einem verdrillten Leitungspaar (12) kommenden Signale, das derart an die erste Eingangsverarbeitungseinheit (1) angeschlossen ist, dass diese in Signale umgewandelt werden, die in etwa zu denjenigen identisch sind, die aus dem Koaxialkabel (41) kommen, und
- mindestens ein Verbindungskabel (12, 23), das aus verdrillten Leitungspaaren besteht, die die erste Verarbeitungseinheit (1) und die zweite Verarbeitungseinheit (3) miteinander verbinden,
wobei die erste Eingangsverarbeitungseinheit (1) Mittel (16) zur Unterbrechung der Übertragung der Signale in dem Fall aufweist, in dem ein Koaxialkabel (53) nicht an die koaxiale Ausgangssteckdose (31) der zweiten Eingangsverarbeitungseinheit (3) angeschlossen ist,
**dadurch gekennzeichnet, dass**
die koaxiale Ausgangssteckdose (31) der zweiten Ausgangsverarbeitungseinheit Mittel (35) zur Erkennung des Vorliegens eines Niederspannungssteckers (52) aufweist, der mit einem koaxialen Ausgangskabel (53) verbunden und in der koaxialen Ausgangssteckdose (31) eingesteckt ist, und
ein verdrilltes Leitungspaar des Verbindungskabels als Rückmeldungsleitung zwischen der zweiten (3) und der ersten (1) Verarbeitungseinheit zur Übertragung eines Signals des Vorliegens oder Fehlens eines Steckers an die Unterbrechungsmittel (16).

2. System nach Anspruch 1, wobei die erste Eingangsverarbeitungseinheit (1) Mittel (16) zur Unterbrechung der Übertragung der Signale in dem Fall aufweist, in dem ein verdrilltes Leitungspaarkabel (12) nicht mit der Schwachstrom-Ausgangssteckdose (11) der ersten Eingangsverarbeitungseinheit (1) verbunden ist.

3. System nach Anspruch 2, wobei die Schwachstrom-Ausgangssteckdose (11) der ersten Eingangsverarbeitungseinheit (1) Mittel (17) zur Erkennung des Vorliegens eines Niederspannungssteckers (18), der mit dem verdrillten Leitungskabel (12) verbunden und in der Ausgangssteckdose (11) eingesteckt ist, aufweist.

4. System nach einem der vorhergehenden Ansprüche, wobei die erste Eingangsverarbeitungseinheit (1) Signalverarbeitungsmittel (14), einen Verteiler (15) und mehrere Schwachstrom-Ausgangssteckdosen (11) für verdrillte Leitungspaare aufweist, die jeweils an den Verteiler (15) angeschlossen sind, wobei die Unterbrechungsmittel (16) derart zwischen dem Verteiler (15) und den Ausgangssteckdosen (11) wirken, dass die Übertragung der Signale zwischen dem Verteiler und der Ausgangssteckdose, für die das Fehlen eines eingesteckten Steckers (18) erkannt wird, unterbrochen wird.

5. System nach einem der vorhergehenden Ansprüche, wobei eine Linienverzweigereinheit (2) zwischen der ersten (1) und der zweiten (3) Verarbeitungseinheit angebracht ist, wobei mindestens ein verdrilltes Leitungspaarkabel (12) die erste Verarbeitungseinheit (1) mit der Linienverzweigereinheit (2) verbindet, und mindestens ein weiteres verdrilltes Leitungspaarkabel (23) die Linienverzweigereinheit (2) mit der zweiten Verarbeitungseinheit (3) verbindet, wobei die zweite Einheit (3) eine koaxiale Ausgangssteckdose (31) und mindestens eine Ausgangssteckdose (32) für verdrillte Leitungspaare aufweist.

6. System nach Anspruch 5, wobei die zweite Verarbeitungseinheit (3) in Form eines Adapters vorliegt, der einen Schwachstromstecker für verdrillte Leitungspaare (33) aufweist, der dazu geeignet ist, in eine Schwachstrom-Ausgangssteckdose (24) für verdrillte Leitungspaare eingesteckt zu werden, die mit der Linienverzweigereinheit (2) für ein verdrilltes Leitungspaarkabel (23) verbunden ist.

7. System nach einem der vorhergehenden Ansprüche, wobei das verdrillte Leitungspaar, das die umgewandelten Fernsehsignale überträgt, störungsfest ist.

8. System nach einem der vorhergehenden Ansprüche, wobei die erste Eingangsverarbeitungseinheit eine aktive Einheit ist, die aktive Verarbeitungsmittel aufweist.

9. System nach Anspruch 8, wobei die aktiven Verarbeitungsmittel eine Verstärkerstufe (14) aufweisen.

10. System nach einem der vorhergehenden Ansprüche, wobei die Verarbeitungsmittel der zweiten Verarbeitungseinheit passive Mittel, wie ein Balun, aufweisen.

11. System nach einem der vorhergehenden Ansprüche, wobei die zweite Verarbeitungseinheit mit einer Schwachstromsteckdose (32) versehen ist, die über einen Modulator mit dem Eingangsanschluss (33) verbunden ist, um die Signale über ein verdrilltes Rückmeldungspaar zu leiten.
